(19) **Europäisches Patentamt**

**European Patent Office**

**Office européen des brevets**

(11) Veröffentlichungsnummer: **0 356 753**

**A2**

(12) **EUROPÄISCHE PATENTANMELDUNG**

(21) Anmeldenummer: **89114412.3**

(51) Int. Cl.⁵: **B60S 9/18**

(22) Anmeldetag: **04.08.89**

(30) Priorität: **27.08.88 DE 3829131**

(43) Veröffentlichungstag der Anmeldung:
**07.03.90 Patentblatt 90/10**

(84) Benannte Vertragsstaaten:
**DE ES FR GB IT NL SE**

(71) Anmelder: **AL-KO KOBER AG**
**Ichenhauser Strasse 14**
**D-8871 Kötz 2(DE)**

(72) Erfinder: **Wöhrle, Rudolf**
**Kirchstrasse 2**
**D-8873 Ichenhausen/Rieden(DE)**
Erfinder: **Werdich, Anton**
**Südring 44**
**D-8878 Bibertal/OT Anhofen(DE)**
Erfinder: **Köhler, Robert**
**Kemnat 126 b**
**D-8877 Burtenbach(DE)**

(74) Vertreter: **Ernicke, Hans-Dieter, Dipl.-Ing. et al**
**Patentanwälte Dipl.-Ing. H.-D. Ernicke**
**Dipl.-Ing. Klaus Ernicke·Schwibbogenplatz**
**2b**
**D-8900 Augsburg(DE)**

(54) **Stützrad.**

(57) Die Erfindung betrifft ein Stützrad (1) für Fahrzeuganhänger, das ein aus zwei Teilen (7,8) bestehendes Außenrohr (6) und ein darin verstellbar geführtes und über eine Spindel (12) ausfahrbares Innenrohr (5) aufweist. Die beiden Außenrohrteile (7,8) sind miteinander verschraubt (9), wobei die Spindel (12) über eine Reibkupplung (18) mit dem oberen Rohrteil (7) verbunden ist. Die Reibkupplung (18) besitzt ein geringes Reibmoment, das jedoch größer als das innere Reibmoment der unbelasteten Verschraubung (9) zwischen den beiden Außenrohrteilen (7,8) ist. Bei unbelastetem Rad werden über die Spindel (12) sowohl das Innenrohr (5) bewegt, als auch die beiden Außenrohrteile (7,8) miteinander verschraubt, wobei sich die Hübe addieren. Bei einer Belastung des Rades rutscht die Reibkupplung (18) durch, wodurch die Rohrverschraubung (9) blockiert wird und nur noch das Innenrohr (5) mit relativ geringen Handkräften bewegt wird.

Fig .2

## Stützrad

Die Erfindung betrifft ein Stützrad mit den Merkmalen im Oberbegriff des Hauptanspruchs.

Derartige Stützräder sind in der Praxis in vielfältigen Ausführungen bekannt. Die Höhenverstellung erfolgt mittels der Kurbel und der Spindel, wobei allerdings nur kurze Wege zurückgelegt werden können. Um das Stützrad schneller auf-und abzulassen, ist an der Anhängerdeichsel in der Regel eine Klemmlasche vorgesehen, die es nach Öffnung erlaubt, das Stützrad insgesamt gegenüber der Deichsel auf- und abzubewegen.

Dies hat den Nachteil, daß die Betriebssicherheit des Stützrades leidet. Ist die Klemmlasche nicht genügend angezogen, kann das Stützrad durchrutschen. In der Praxis kommt es auch häufig vor, daß die Klemmschraube der Lasche durch Rost fest geht oder sogar bricht. Ungünstig ist außerdem, daß zum Heben und Senken des Stützrades zwei Bewegungen erforderlich sind, wobei die Bedienungsperson sich auch die Hände schmutzig machen kann. Das bekannte Stützrad bedingt ferner eine Anbringung an der Außenseite der Deichsel, damit die Klemmlasche zugänglich ist.

Es ist daher Aufgabe der vorliegenden Erfindung, ein Stützrad aufzuzeigen, das sich schnell und bequem ein- und ausfahren läßt und eine höhere Betriebssicherheit aufweist.

Die Erfindung löst diese Aufgabe mit den Merkmalen im Kennzeichenteil des Hauptanspruchs und der Nebenansprüche.

Die erfindungsgemäße zweiteilige Konstruktion des Außenrohres ermöglicht es in Verbindung mit der Reibkupplung, das Stützrad nur durch Kurbeldrehung ein- und auszufahren, wobei nur wenige Umdrehungen mit relativ geringem Kraftaufwand benötigt werden. Das erfindungsgemäße Stützrad bedarf damit auch keiner Klemmlasche mehr, sondern kann ortsfest an der Deichsel in geschützter Innenposition befestigt werden. Dies bringt auch Vorteile hinsichtlich des Einschlagwinkels mit sich, was vor allem für Mehrgelenkkupplungen von Vorteil ist.

Für die Bedienbarkeit erweist es sich als vorteilhaft, daß eine Kurbeldrehung zugleich in einen Spindelhub und einen Hub im Bewegungsgewinde zwischen den beiden Außenrohrteilen umgesetzt werden kann, wobei die Außenrohrteile teleskopartig ineinandergleiten. Die beiden Hübe addieren sich, so daß eine hohe Übersetzung erzielbar ist und das Stützrad mit wenigen Kurbeldrehungen und wenig Kraftaufwand ein- und ausgefahren werden kann. Durch entsprechende Wahl der Gewindesteigung an den beiden Außenrohrteilen kann diese Übersetzung zusätzlich beeinflußt werden.

Das zu bewegende Außenrohrteil, üblicherweise das Oberteil, wird durch eine Reibkupplung bei der Kurbeldrehung mitgenommen. Hierbei empfiehlt es sich, in weiterer Ausgestaltung der Erfindung ein geringes Reibmoment dieser Kupplung vorzusehen, das jedoch etwas größer als das innere Reibmoment der unbelasteten Verschraubung zwischen den beiden Außenrohrteilen ist. Hierdurch wirken die Spindel-und die Rohrverschraubung nur bei entlastetem Rad unter Addierung ihrer Hübe zusammen. Sobald das Rad am Boden aufsteht und sich eine gewisse Reaktionskraft entwickelt, wäre für eine Bewegung der Rohrverschraubung eine wesentlich erhöhte Handkraft nötig, was ergonomisch unerwünscht ist. Nachdem bei Auftreten einer Reaktionskraft jedoch das innere Reibmoment der Rohrverschraubung größer wird als das Kupplungsreibmoment, rutscht die Reibkupplung durch. Damit wird die Rohrverschraubung blockiert und es braucht nur noch die Spindel mit relativ geringen Handkräften gedreht werden. Auf diese Weise wird beim erfindungsgemäßen Stützrad die Übersetzung selbsttätig auf ergonomisch günstige Weise umgeschaltet.

In den Unteransprüchen sind vorteilhafte Ausgestaltungen des Stützrades angegeben. Über die Feder läßt sich das Kupplungsreibmoment bequem auf den gewünschten Wert einstellen. Das Oberteil des Außenrohres weist vorzugsweise die längere Gewindestrecke auf, wodurch sich eine Ausgestaltung als Kunststoffteil aus wirtschaftlichen Gründen anbietet. Das Unterteil des Außenrohres besteht demgegenüber aus Metall und weist nur einen einzelnen Schraubengang auf, der pratischerweise direkt aus dem umgebördelten Rohrrand gebildet ist und an einem axialen Schlitz beginnt und endet. Dies ermöglicht die Anordnung von Sicherungsstiften in den Ausläufen des Bewegungsgewindes, die ein Verkanten in diesen Ausläufen verhindern.

Das erfindungsgemäße Stützrad zieht seinen besonderen Vorteil aus der Addition des Spindelhubs und des Hubs der Rohrverschraubung. Hierzu empfiehlt sich gemäß dem nebengeordneten Anspruch 10 eine Drehsperre zwischen dem Innen- und Außenrohr, damit die Spindel nicht leer geht. Der Widerstand der Drehsperre muß dazu nur gerade größer als das innere Reibmoment der Spindelverschraubung sein. Die Drehsperre ist vorzugsweise als Federraste ausgebildet, die unterschiedlich gestaltet sein kann. .Die erfindungsgemäße Drehsperre läßt sich außer zur Sicherung der Hubaddition beim Erfindungsgegenstand auch mit Erfolg in Verbindung mit Stützrädern nach dem Stand der Technik einsetzen.

Das erfindungsgemäße Stützrad läßt sich allein durch eine Kurbelbewegung ein- und ausfahren und wird daher vorzugsweise ortsfest an der Deichsel angeflanscht. Aus Sicherheitsgründen ist es aber erforderlich, daß das Laufrad möglichst nah unter oder an die Deichsel hochgezogen werden kann. Dies ist durch eine schräge Anschlagplatte am Innenrohr möglich, die mit dem entsprechend abgeschnittenen Unterrand des Außenrohres zusammenwirkt. Hierdurch kann das Innenrohr völlig im Außenrohr versenkt werden und das Laufrad bis an die Deichsel hochgezogen werden. Der schräge Anschlag hat außerdem den Vorteil, daß er im hochgekurbelten Zustand eine Drehsicherung zwischen Innen- und Außenrohr darstellt. Das Innenrohr ist hierzu fest mit dem Radträger verbunden, so daß auch die Lage des Laufrades definiert ist. Der erfindungsgemäße schräge Anschlag läßt sich unter Nutzung gleicher oder ähnlicher Vorteile auch bei Stützrädern nach dem Stand der Technik einsetzen.

Im Gegensatz zu vorbekannten Stützrädern läßt sich das erfindungsgemäße Stützrad im Innenbereich der Deichsel anbringen. Dies hat in der Regel zur Folge, daß das Laufrad nicht mehr wie bei der früheren außenseitigen Anordnung neben der Deichsel hochgezogen werden kann, sondern eine Ruhestellung unter den Deichselholmen, der Auflaufeinrichtung oder sonstigen Anbauteilen einnehmen muß. Aus Sicherheitsgründen muß dabei die Unterkante des Laufrades möglichst weit nach oben wandern, was wiederum eine möglichst niedrige Bauhöhe des Laufrades erfordert. Um dies zu erreichen, wird mit dem nebengeordneten Anspruch 12 ein Zwillingsrad vorgeschlagen, zwischen dessen Radhälften ein flacher Radträger angeordnet ist. Hierdurch kann die bislang übliche, das Laufrad an der Oberseite platzaufwendig übergreifende Lagergabel entfallen. Zusätzlich empfiehlt es sich, den Radträger als Scheibe so auszubilden, daß er fast bis zur Lauffläche der Radhälften reicht und dadurch den Schlitz zwischen den Radhälften gegen eindringende Steine oder Schmutz schließt. Die erfindungsgemäße Radausbildung kann mit Vorteil auch in Verbindung mit Stützrädern nach dem Stand der Technik Verwendung finden.

Das erfindungsgemäße Stützrad läßt sich mit seinen verschiedenen Ausgestaltungen an beliebigen Anhängern oder sonstigen Fahrzeugen, die einer rollfähigen Stütze bedürfen, einsetzen. Besondere Vorteile ergeben sich für Wohnwagen oder sonstige Anhänger, die mit ihrer Deichsel auf einer Fahrzeugkupplung abgestützt und eingehängt werden.

Die Erfindung ist in den Zeichnungen beispielsweise und schematisch dargestellt. Im einzelnen zeigen:

Fig. 1: eine Anhängerdeichsel mit Stützrad in Draufsicht,

Fig. 2 und 3: ein Stützrad in teilweise geschnittener Seiten- und Stirnansicht,

Fig. 4: einen Schnitt durch das Stützrad von Fig. 2 entlang Schnittlinie IV - IV,

Fig. 5: eine Seitenansicht des Unterteils des Außenrohrs und

Fig. 6: eine Variation der Drehsperre von Fig. 4.

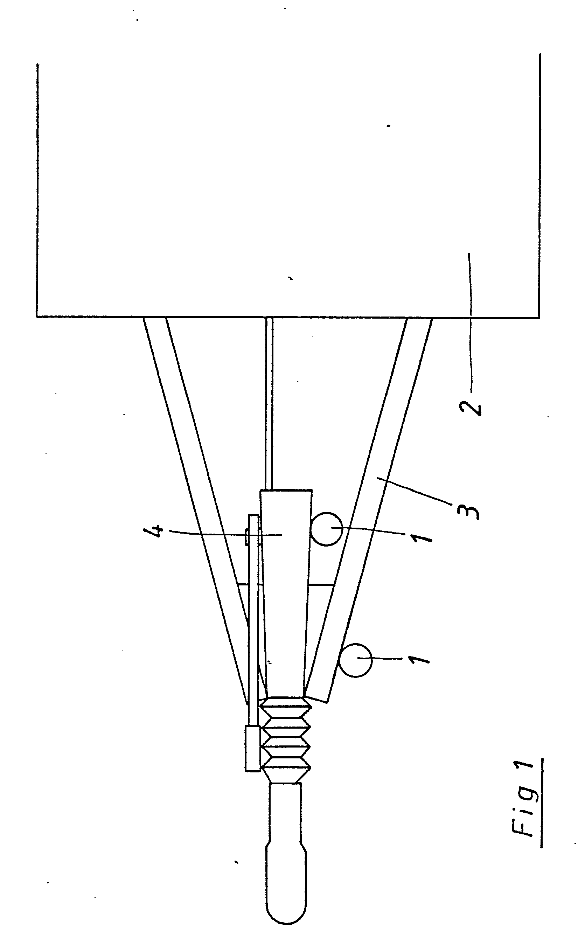

Fig. 1 zeigt in schematischer Darstellung einen Fahrzeuganhänger (2), hier in Form eines Wohnwagens, der mit einer aus zwei Gabelholmen bestehenden Deichsel (3) über ein Kupplungsgehäuse auf einer Kugelkopfkupplung eines Zugfahrzeuges (nicht dargestellt) eingehängt wird. Am Deichselkopf ist eine Auflaufeinrichtung (4) angeordnet, mit der die Anhängerbremsen betätigt werden. Zur Abstützung der Deichsel (3) ist ein Stützrad (1) vorgesehen, das nachstehend näher beschrieben wird. Das Stützrad (1) ist im Innenbereich der Deichsel (3) zwischen den Gabelholmen ortsfest angeflanscht. Die Befestigungsstelle kann an der Auflaufeinrichtung (4) oder einem Deichselholm liegen. Das Stützrad (1) kann in vorbekannter Art auch außenseitig an einem Deichselholm ortsfest angeflanscht oder über eine Klemmleiste lösbar befestigt sein.

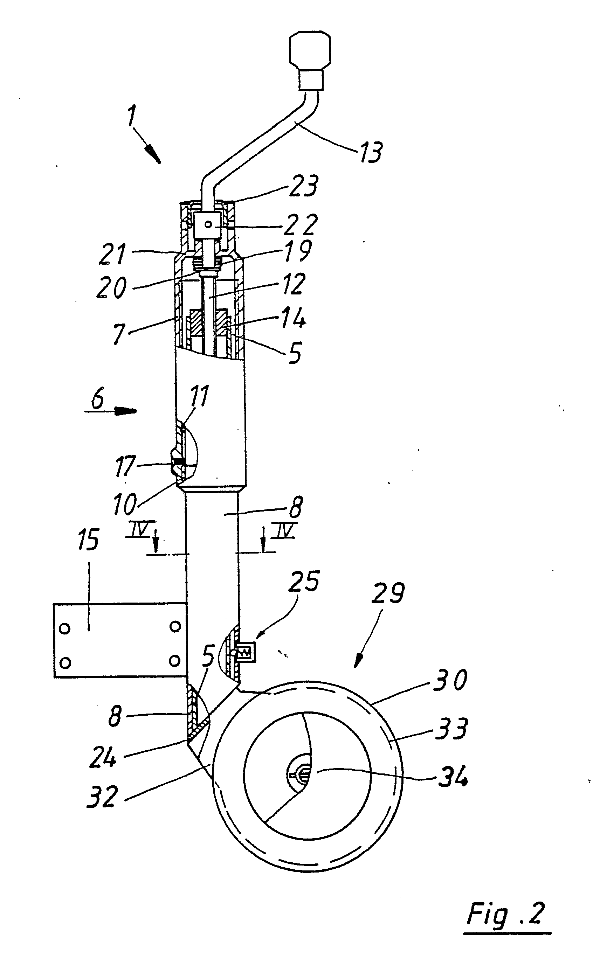

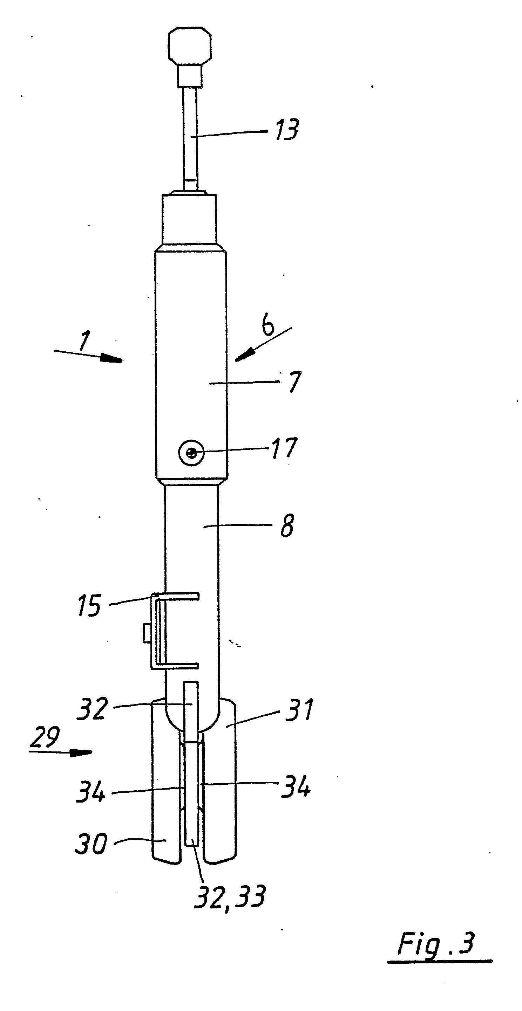

Das in Fig. 2 und 3 näher dargestellte Stützrad (1) besteht aus einem Innenrohr (5) und einem zweiteiligen Außenrohr (6), in dem das Innenrohr (5) längsverstellbar eintaucht. Am unteren Ende des Innenrohrs (5) ist der Radträger (32) für das Laufrad (29) befestigt. Am oberen Ende ist das Innenrohr (5) durch eine Spindelmutter (14) verschlossen, die mit der durch eine Kurbel (13) betätigbaren Spindel (12) im Eingriff steht. Durch eine Drehung der Kurbel (13) bzw. der Spindel (12) wird das Innenrohr (5) im Außenrohr (6) auf- und abbewegt.

Das Außenrohr (6) besteht aus einem Oberteil (7) und einem Unterteil (8), die über eine Verschraubung (9) ineinandergreifen. Das Unterteil (8) des Außenrohres (6) ist mittels eines seitlich wegstehenden Flansches (15) ortsfest montiert. Die Verschraubung (9) ist als Bewegungsgewinde ausgebildet, so daß die beiden Rohrteile (7,8) bei einer gegenseitigen Drehbewegung ineinandertauchen können. Hierdurch läßt sich die Gesamtlänge des Außenrohres (6) verringern oder vergrößern.

Die Spindel (12) durchsetzt das Oberteil (7) und ist mit diesem über eine Reibkupplung (18) unter bestimmten Umständen drehschlüssig verbunden. Die Spindel (12) ist hierzu am Oberteil (7) axial mittels einer Stützhülse (22) und der Reibkupplung (18) geführt. Die Stützhülse (22) ist drehfest auf der Spindel (12) befestigt und stützt sich mit etwas Spiel auf einem Führungsflansch des Rohrbodens (21) ab. Der Rohrboden (21) ist gegenüber dem oberen Rand des Rohrteiles (7) unter Bildung einer zylindrischen Hohlkammer abgesenkt, die mittels einer Abdeckung (23) verschlossen werden kann.

Die Reibkupplung (18) beinhaltet eine Feder (19), die im gezeigten Ausführungsbeispiel als ein Paket von mehreren Tellerfedern ausgebildet ist. Das Federpaket (19) stützt sich nach oben am besagten Rohrboden (21) und nach unten auf einem spindelfesten Ansatz (20), hier in Form einer drehfesten Scheibe, ab. Das Federpaket (19) ist vorgespannt und entwickelt in der Anlage an der Scheibe (20) und dem Rohrboden (21) ein einstellbares Reibmoment. Dieses Reibmoment ist zur Erzielung eines ergonomisch günstigen niedrigen Kurbelwiderstandes möglichst gering. Es ist jedoch größer als die innere Reibung der unbelasteten Verschraubung (9) zwischen den beiden Rohrteilen (7,8). Im Sinne der Erfindung wird die Verschraubung als unbelastet bezeichnet, wenn sie nur das Eigengewicht der Stützradteile und keine weiteren äußeren Stützkräfte aufzunehmen hat.

Hängt das Laufrad (29) in der Luft oder ist es von der Stützkraft am Boden befreit, wirkt in der Verschraubung (9) nur das vorerwähnte niedrige Reibmoment. Bei einer Kurbeldrehung wird aufgrund des höheren Reibmomentes in der Kupplung (18) das Oberteil (7) des Außenrohres (6) mitgenommen und dreht sich gegenüber dem ortsfest montierten Unterteil (8). Durch die Spindeldrehung wird auch das Innenrohr (5) bewegt.

Beim Hochkurbeln schraubt sich das Oberteil (7) gegenüber dem Unterteil (8) nach oben und nimmt die Spindel (12) mit. Zugleich wandert das Innenrohr (5) relativ zur Spindel (12) nach oben. Am Laufrad (29) addieren sich der Hub der Rohrverschraubung (9) und der Spindelverschraubung, so daß das Laufrad (29) mit wenigen Kurbelumdrehungen nach oben in Anschlagposition bewegt werden kann. Zugleich taucht das Innenrohr (5) völlig im Unterteil (8) des Außenrohres (6) ein. Bei Umkehr der Kurbeldrehung dreht sich auch der vorbeschriebene Vorgang um, so daß das Laufrad (29) unter Addition der beiden Hübe sehr schnell nach unten wandert.

Durch den größeren Verschraubungsdurchmesser führt das Oberteil (7) bei einer Kurbelumdrehung ohnehin einen größeren Hub als das Innenrohr (5) aus. Die Steigung der beiden Verschraubungen kann daher gleich gewählt werden. Alternativ können aber auch andere Steigungsverhältnisse Verwendung finden.

Die vorbeschriebene Funktion gilt für den Fall des unbelasteten Laufrades. Sobald das Laufrad (29) Bodenkontakt hat und sich eine Reaktionskraft zur Abstützung der über die Deichsel (3) einwirkenden Lasten ausbildet, wirkt diese auch als Axialkraft in der Verschraubung (9). Das hat eine Erhöhung des dortigen Reibmomentes zur Folge. Sobald dieses größer als das Reibmoment der Kupplung (18) ist, was aufgrund der Durchmesserunterschiede sehr schnell der Fall ist, blockiert die Verschraubung (9) und die Reibkupplung (18) rutscht durch. In diesem Zustand wird die Drehbewegung der Spindel (12) nur noch in eine Hubbewegung des Innenrohrs (5) umgesetzt. Zur Erzielung des gewünschten Gesamthubes sind damit zwar mehr Kurbelumdrehungen, dafür aber nur eine vergleichsweise geringe Handkraft erforderlich. Um einen Hub in der Verschraubung (9) zu bewirken, wären ergonomisch ungünstige Kräfte nötig.

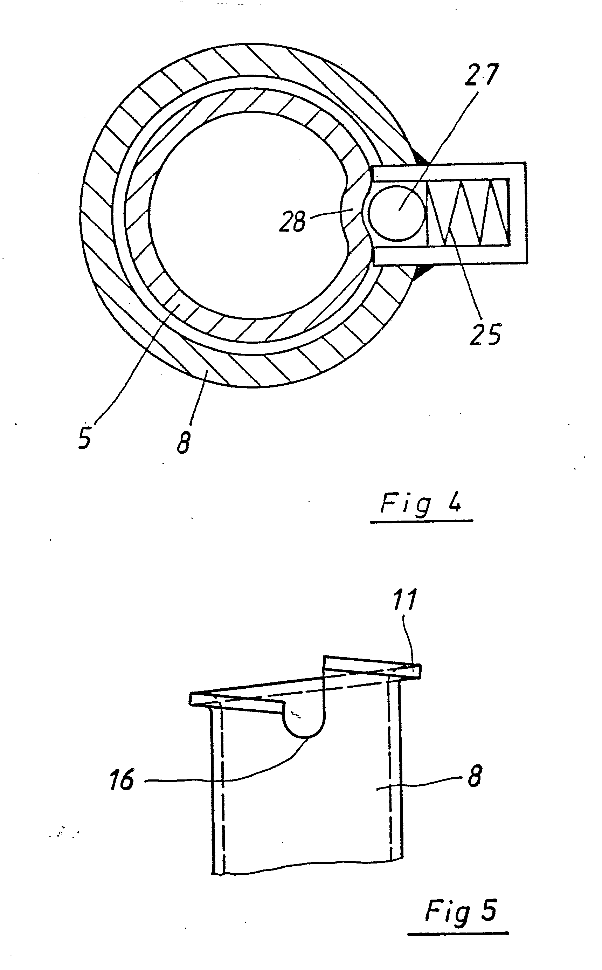

Fig. 2 und 5 zeigen die Gestaltung der Rohrverschraubung (9) im einzelnen. Das Oberteil (7) weist ein fast über die ganze Länge gehendes Innengewinde (10) auf. Am unteren Gewindeauslauf ist ein radialer, von außen eindrehbarer Sicherungsstift (17) im Rohrmantel angeordnet. Ein Sicherungsstift kann in gleicher Weise auch am oberen Gewindeauslauf vorgesehen sein. Das Oberteil (7) besteht aus Kunststoff und ist vorzugsweise als Spritzteil ausgeführt.

Das Unterteil (8) des Außenrohres (6) ist als gerades Zylinderrohr ausgebildet und weist an seinem oberen Rand einen einzelnen Schraubengang (11) auf (vgl. Fig. 5). Es empfiehlt sich, das Unterteil (8) aus Metall, vorzugsweise Stahl, zu fertigen und den Schraubengang (11) aus dem entsprechend schraubenförmig abgeschnittenen und nach außen umgebördelten Rohrrand zu bilden. Im Rohrmantel ist hierbei von der Stirnseite ausgehend ein Längsschlitz (16) angeordnet, an dem der einzelne Schraubengang (11) beginnt und endet.

Zur Montage wird das Unterteil (8) in das Oberteil (7) eingeschraubt, wobei der oder die Sicherungsstifte (17) herausgedreht sind. Sobald der Schraubengang (11) die Sicherungsstifte (17) vollständig passiert hat, werden diese wieder bis in den Flankenbereich des Gewindes eingedreht. Werden die beiden Rohrteile (7,8) zu weit auseinander oder ineinandergeschraubt, schlägt der Gewindegang (11) an den Sicherungsstiften (17) an, die eine weitere Drehbewegung sperren.

Wie Fig. 2 im teilweise abgebrochenen Längsschnitt und Fig. 4 im Querschnitt verdeutlichen, ist zwischen dem Innenrohr (5) und dem Unterteil (8) des Außenrohres eine Drehsperre (25) vorgesehen, die im gezeigten Ausführungsbeispiel als Federraste ausgebildet ist. Das Innenrohr (5) weist hierzu eine über seine Länge im wesentlichen durchgehende Längsnut (28) auf. Am Unterteil (8) ist eine Ausbuchtung vorgesehen, die eine Druckfeder und eine Arretierkugel (27) aufnimmt. Die Arretierkugel (27) wirkt mit der Nut (28) zusammen und sichert die gegenseitige Drehlage der Rohre (5,8). Die gezeigte Zuordnung der Federrastenteile zu den Rohren (5,8) kann auch umgedreht sein.

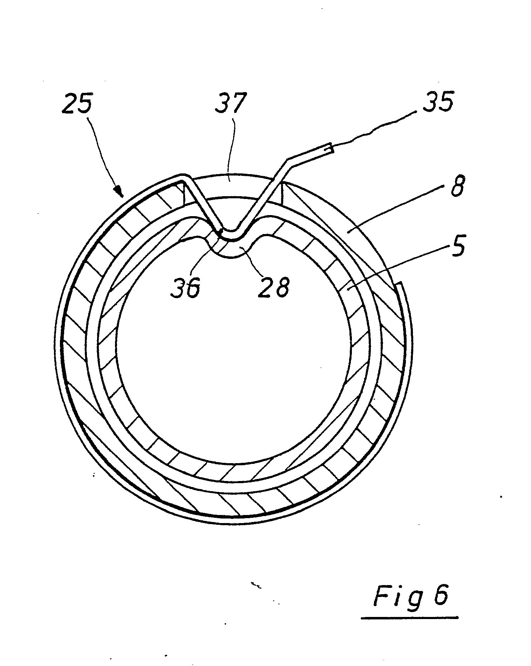

Fig. 6 zeigt eine Variante der Federraste (25). Diese besteht aus einer ringförmigen, offenen Federspange (35), die außen auf das Rohrteil (8) aufgezogen wird und mit einer nach innen vorspringenden Nase (36) durch eine Öffnung (37) im Mantel des Außenrohrteiles (8) ragt. Die Nase (36) ist in der Öffnung (37) geführt und steht mit der Längsnut (28) im federnden Eingriff.

Die Federrasten (25) sind von ihrer Sperrwirkung auf das innere Reibmoment an der Spindelmutter (14) abgestimmt. Das Sperrmoment ist geringfügig größer als dieses Reibmoment, so daß bei eingefallener Federraste (25) die Drehbewegung der Kurbel (13) in eine Hubbewegung des Innenrohres (5) umgesetzt wird. Andererseits ist die Sperrwirkung so niedrig, daß sie einer Verdrehung des Laufrades (29) für Rangierzwecke nicht entgegensteht.

Wie Fig. 2 verdeutlicht, ist das Unterteil (8) des Außenrohres (6) am unteren Rand schräg, vorzugsweise unter einem Winkel von ca. 45° abgeschnitten. Die Schnittfläche weist dabei vom Flansch (15) weg. Das Innenrohr (5) ist im gleichen Winkel schräg abgeschnitten und trägt eine entsprechend ausgerichtete Anschlagplatte (24), an der wiederum der Radträger (32) befestigt ist. Die Anschlagplatte (24) steht zumindest an drei Seiten über die Kontur des Innenrohres (5) vor und legt sich bei eingezogenem Innenrohr plan an den Unterrand des Außenrohrteiles (8). Nachdem das Innenrohr (5), die Anschlagplatte (24) und der Radträger (32) starr miteinander verbunden sind, wirkt die Anschlagplatte (24) in dieser Stellung als Drehsicherung. Diese Lage entspricht vorzugsweise auch der Sperrlage der Drehsicherung (25).

Fig. 3 zeigt hierzu eine Variante, die in Ergänzung oder statt der vorbeschriebenen Anordnung verwendet werden kann. Hierzu ist im Unterteil (8) des Außenrohres (6) ein axialer, unten offener Schlitz vorgesehen, in den der schmale Radträger (32) zur Sicherung der Drehlage greift. Der Radträger (32) ist hierzu nach oben verlängert und steht nach hinten über das Innenrohr (5) vor.

Wie Fig. 2 verdeutlicht, ist die Radnabe (34) seitlich versetzt gegenüber der Längsachse der Rohre (5,6) angeordnet. Das Laufrad (29) besteht aus zwei breiten Radhälften (30,31) mit relativ niedrigem Durchmesser. Dies ermöglicht eine große Aufstandsfläche des Laufrades (29), das zugleich mit seiner Unterkante möglichst weit unter die Deichsel (3) oder die Auflaufeinrichtung (4) gezogen werden kann. Die beiden Radhälften (30,31) sind voneinander axial distanziert, wobei in den Schlitz der Radträger (32) greift, an dem die Radhälften (30,31) beidseits gelagert sind. Der Radträger (32) ist als flaches Blech ausgebildet. Er weist im Bereich zwischen den Radhälften (30,31) eine runde, der Radkontur weitgehend angepaßte Scheibe (33) auf, deren Durchmesser geringfügig kleiner ist als der Raddurchmesser. Wie Fig. 3 verdeutlicht, füllt die Scheibe (33) den Schlitz zwischen den Radhälften (30,31) fast vollständig aus und verhindert ein Eindringen von Fremdkörpern.

## STÜCKLISTE

1 Stützrad
2 Fahrzeug-Anhänger
3 Deichsel
4 Auflaufeinrichtung
5 Innenrohr
6 Außenrohr
7 Oberteil Außenrohr
8 Unterteil Außenrohr
9 Verschraubung
10 Gewinde
11 Schraubengang, Rand
12 Spindel
13 Kurbel
14 Spindelmutter
15 Flansch
16 Schlitz
17 Sicherungsstift
18 Reibkupplung
19 Feder, Federpaket
20 Ansatz, Scheibe
21 Rohrboden
22 Stützhülse
23 Abdeckung
24 Anschlagplatte
25 Drehsperre, Federraste
27 Arretierkugel
28 Längsnut
29 Rad
30 Radhälfte
31 Radhälfte
32 Radträger
33 Scheibe
34 Nabe
35 Federspange
36 Nase
37 Öffnung

## Ansprüche

1.) Stützrad für Fahrzeug-Anhänger mit einem Außenrohr und einem darin verstellbar geführten über eine Spindel ausfahrbaren Innenrohr, das mit dem Rad verbunden ist, dadurch **gekennzeichnet**, daß das Außenrohr (6) aus zwei Teilen (7,8) besteht, die miteinander verschraubt (9) sind, wobei die Spindel (12) über eine Reibkupplung (18) mit einem Rohrteil (7) verbunden ist.

2.) Stützrad nach Anspruch 1, dadurch **ge-**

kennzeichnet, daß die Reibkupplung (18) ein geringes Reibmoment aufweist, das jedoch größer als das innere Reibmoment der unbelasteten Verschraubung (9) ist.

3.) Stützrad nach Anspruch 1 oder 2, dadurch gekennzeichnet, daß die Spindel (12) im Oberteil (7) des Außenrohres (6) axial geführt ist, und daß die Reibkupplung (18) eine Feder (19) aufweist, die zwischen dem Oberteil (7) und einem Ansatz (20) an der Spindel (12) axial eingespannt ist.

4.) Stützrad nach Anspruch 1 oder einem der folgenden, dadurch gekennzeichnet, daß das Unterteil (8) des Außenrohres (6) einen Flansch (15) zur ortsfesten Montage am Fahrzeug-Anhänger (2) aufweist.

5.) Stützrad nach Anspruch 1 oder einem der folgenden, dadurch gekennzeichnet, daß das Oberteil (7) des Außenrohres (6) aus Kunststoff besteht.

6.) Stützrad nach Anspruch 1, dadurch gekennzeichnet, daß das Unterteil (8) des Außenrohrs (6) einen einzelnen Schraubengang (11) aufweist, der an einem axialen Schlitz (16) im Rohrmantel beginnt und endet.

7.) Stützrad nach Anspruch 6, dadurch gekennzeichnet, daß der Schraubengang (11) als umgebördelter Rohrrand ausgebildet ist.

8.) Stützrad nach Anspruch 6 oder 7, dadurch gekennzeichnet, daß an den Ausläufen des Gewindes (10) im Oberteil (7) des Außenrohres (6) radiale Sicherungsstifte (17) angeordnet sind, an denen der Schraubengang (11) des Unterteils (8) anschlägt.

9.) Stützrad, insbesondere nach Anspruch 1, dadurch gekennzeichnet, daß zwischen Innenrohr (5) und Außenrohr (6) eine lösbare Drehsperre (25) angeordnet ist.

10.) Stützrad nach Anspruch 9, dadurch gekennzeichnet, daß die Drehsperre (25) als Federraste ausgebildet ist, die mit einer Längsnut (28) zusammenwirkt.

11.) Stützrad, insbesondere nach Anspruch 1, dadurch gekennzeichnet, daß das Unterteil (8) des Außenrohres (6) einen schräg abgeschnittenen unteren Rand aufweist, und daß das Innenrohr (5) am unteren Ende eine im gleichen Winkel schräg stehende Anschlagplatte (24) besitzt, die in eingezogener Stellung am Unterteil (8) flächig anliegt.

12.) Stützrad, insbesondere nach Anspruch 1, dadurch gekennzeichnet, daß das Rad (29) aus zwei Hälften (30,31) besteht, zwischen denen ein flacher Radträger (32) angeordnet ist.

13.) Stützrad nach Anspruch 12, dadurch gekennzeichnet, daß der Radträger (32) im Radbereich eine runde, der Radkontur angepaßte Scheibe (33) aufweist, deren Durchmesser geringfügig kleiner als der Raddurchmesser ist.

2

3

1

4

1

*Fig 1*

Fig .2

*Fig .3*

_Fig 4_

_Fig 5_

*Fig 6*